# EUROPEAN PATENT APPLICATION

(11) **EP 0 860 547 A2**
(43) Date of publication of application: **26.08.1998**
(21) Application number: 98301224.6
(22) Date of filing: 19.02.1998
(51) Int. Cl.: D21H 17/69

(54) **Producing gloss papers**

(30) Priority: 22.02.1997 GB 9703725
(71) Applicant: ECC INTERNATIONAL LIMITED, Theale, Reading, Berkshire RG7 4SA (GB)
(72) Inventor: Husband, John Claude, Dr., St Austell, Cornwall, PL25 4HR (GB)
(74) Representative: McCormack, Derek James

(57) **Abstract**

A method of producing a gloss publication grade paper showing when printed by a gravure printing process an improved print quality which method includes the steps of:
(a) preparing a paper sheet from a paper making composition comprising a cellulosic fibrous material and a particulate filler material;
(b) optionally coating the paper sheet with a coating composition comprising an aqueous suspension of a particulate coating pigment material and a hydrophilic binder; and
(c) calendering the paper sheet;
wherein in step (a) the particulate filler material employed in the paper making composition has been treated prior to addition to the cellulosic fibrous material by addition thereto of a surface treatment agent to hydrophobise the particulate filler material, the surface treatment agent comprising molecules having a hydrophilic moeity and a hydrophobic moeity, the hydrophobic moeity comprising at least one hydrocarbon group having from 8 to 30 carbon atoms.

## Description

The present invention is related to producing gloss papers. In particular it relates to a method of producing publication grade gloss papers, especially supercalendered magazine paper and lightweight coated paper, suitable for improved printing thereon by a gravure printing process.

Gloss paper types are widely used and include supercalendered paper and lightweight coated paper.

Supercalendered paper is paper which has been repeatedly passed between rollers in a known manner to provide acceptable print quality and smoothness without the need for application of an additional coating to give gloss. Supercalendered magazine paper contains, according to its grade, from about 3% by weight to about 33% by weight of an inorganic filler, and has a weight per unit area, or grammage, in the range of from 45 to 70g.m⁻². Most supercalendered paper is used for printing magazines by the gravure process, especially in Europe.

Lightweight coated paper is coated, generally by means of a roll applicator followed by a doctor blade, or by means of a short dwell time applicator, under conditions such that the coat weight is in the range of from about 5 g.m⁻² to about 13 g.m⁻² per side. It is used for printing magazines, catalogues and direct mail literature by both the gravure and web offset processes. The base paper may contain from about 2% to about 30% by weight of inorganic filler.

The object of the invention is to provide a method for producing a gloss publication grade printing paper which will yield improved results when the paper is to be printed by a gravure printing process.

According to the present invention there is provided a method of producing a gloss publication grade paper which shows an improved print quality when printed by a gravure process, which method includes the steps of:
(a) preparing a paper sheet from a paper making composition comprising a cellulosic fibrous material and a particulate filler material;
(b) optionally coating the paper sheet with a coating composition comprising an aqueous suspension of a particulate coating pigment material and a hydrophilic binder; and
(c) calendering the paper sheet;
wherein in step (a) the particulate filler material employed in the paper making composition has been treated prior to addition to the cellulosic fibrous material by addition thereto of a surface treatment agent to hydrophobise the particulate filler material, the surface treatment agent comprising molecules having a hydrophilic moeity and a hydrophobic moeity, the hydrophobic moeity comprising at least one hydrocarbon group having from 8 to 30 carbon atoms. Preferably, the said molecules are such that the said hydrocarbon group is a linear aliphatic group.

Preferably, the surface treatment agent is present with the particulate filler material in an amount which forms from 0.1% to 3.0% especially 0.5% to 2.0% of the dry weight of the particulate filler material employed in step (a).

The particulate filler material is preferably a kaolinitic clay, or kaolin, or metakaolin or an alkaline earth metal carbonate, in particular calcium carbonate which may be a precipitated and/or ground material.

If the particulate filler material has a weakly electronegative surface eg comprises kaolin, a kaolinitic clay or metakaolin, the surface treatment agent is preferably either an additive (a) or (b) as follows:
(a) an amine or a quaternary ammonium compound having at least one hydrocarbon group having a chain length of from 8 to 30 carbon atoms, or a salt of such an amine or quaternary ammonium compound; or
(b) a cationic or amphoteric surfactant having at least one hydrocarbon group having a chain length of from 8 to 30 carbon atoms. Especially suitable amphoteric surfactants are based on imidazoline and have the general formula: 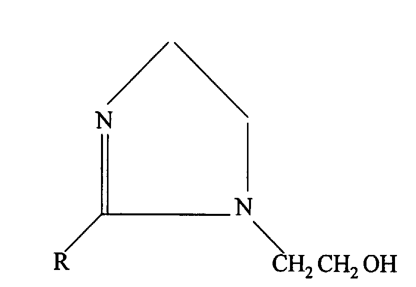
where R is a hydrocarbon group having a chain length of from 8 to 30 carbon atoms. An especially suitable amphoteric surfactant is 1-hydroxyethyl-2-heptadecenyl imidazoline. The surface treatment agent may comprise a mixture of both additives (a) and (b).

The said amine may be a primary, secondary or tertiary amine. A preferred generalised form of amine is a primary amine salt of the form 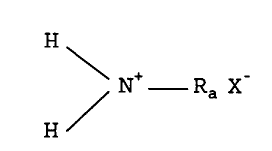 wherein Rₐ is an aliphatic group or a mixture of aliphatic groups which may be saturated or unsaturated or both. x⁻ is a suitable charge balancing anion, eg halide such as chloride. Such an amine having a mixture of Rₐ groups may for example be derived from natural sources, eg obtained from treatment of tallow.

If the particulate filler material has a weakly electropositive surface, eg comprises an alkaline earth metal carbonate, the surface treatment agent preferably comprises a carboxylic acid, eg a fatty acid, having at least one hydrocarbon group having a chain length of from 8 to 30 carbon atoms, or a water-soluble salt of such an acid. The alkaline earth metal carbonate may alternatively or in addition be treated with, eg from 0.1% to 2.0% by weight based on the dry weight of alkaline earth metal carbonate, of an anionic surfactant. An especially suitable anionic surfactant is sodium dodecyl sulphate.

Where a surfactant is employed it may also be desirable to include an antifoamer to reduce foaming when the coated material is added to pulp to form the paper making composition, eg in an amount of up to 1% by weight of the composition.

Other conventional additives may be included in the paper making composition employed in step (a) of the method according to the first aspect. For example, up to 0.5% by weight of a retention aid, eg a cationic or anionic or non-ionic polyacrylamide may be added to the composition optionally together with a mineral so-called microparticle additive such as bentonite or silica.

The amount of the surface treatment agent inorganic filler material employed in the paper making composition in step (a) is preferably in the range of from about 3% to about 33% of the total dry weight of the filler and cellulosic fibres employed in the paper making composition in step (a). The treated filler material may be mixed with other particulate filler materials, which may or may not have been surface treated, in the formation of the paper making composition in step (a).

Step (a) may be carried out generally in the manner well known to those skilled in the paper making art. Thus, the papermaking composition may be applied in the form of a dilute aqueous suspension, eg containing from 0.3% to 1.0% by weight of solid material, in a paper machine to a moving wire mesh belt structure known in the art as a "wire", on which the solids are retained and the paper web or sheet is formed. Following partial dewatering on the wire, the paper web or sheet is transferred onto a moving belt on which it is further dewatered and dried. The paper sheet produced is further treated by calendering in step (c) to give a smooth gloss surface. The calendering may or may not be preceded by coating in step (b) to give a surface coating layer which will provide a suitably enhanced degree of gloss following calendering.

Step (b), if applied, may be carried out in a known way. In step (b) the solids content of the paper coating composition applied may be greater than 60% by weight, preferably at least 70%, preferably as high as possible but still giving a suitably fluid composition which may be used in the coating process. The particulate coating pigment in step (b) may be selected from the coating pigments employed in the art, eg kaolin or calcined kaolin clay, processed, natural or precipitated calcium carbonate (pcc), titanium dioxide, calcium sulphate, satin white, talc and so called 'plastic pigment' and blends of such pigments, eg kaolin and pcc.

The binder of the coating composition may comprise a known hydrophilic adhesive, eg one derived from natural starch obtained from a known plant source, for example, wheat, maize, potato or tapioca. The starch may be unmodified or raw starch, or it may be modified by one or more chemical treatments known in the art. Alternatively, the binder may comprise a proteinaceous material or a latex of one of the kinds well known in the art or a mixture of different like adhesives.

In each case the adhesive or binder may form from 4% to 30%, eg 8% to 20%, especially 8% to 15% by weight of the solids content of the coating composition. The amount employed will depend upon the coating composition and the type of adhesive, which as noted above, may itself incorporate one or more ingredients.

Additives in various known classes may, depending upon the type of coating and material to be coated, be included in the coating composition employed in step (b). Examples of such classes of optional additive are as follows:
**(a) cross linkers:** eg in levels 0 to 5% by weight; for example glyoxals, melamine formaldehyde resins, ammonium zirconium carbonates.
**(b) water retention aids:** eg in an amount of up to 2% by weight, for example sodium carboxymethyl cellulose, hydroxyethyl cellulose, PVA (polyvinyl acetate), starches, proteins, polyacrylates, gums, alginates, polyacrylamide bentonite and other commercially available products sold for such applications.
**(c) viscosity modifiers or thickeners:** eg in levels up to 2% by weight; for example polyacrylates, emulsion copolymers, dicyanamide, triols, polyoxyethylene ether, urea, sulphated castor oil, polyvinyl pyrrolidone, montmorillonite, CMC (carboxymethyl celluloses), sodium alginate, xanthan gum, sodium silicate, acrylic acid copolymers, HMC (hydroxymethyl celluloses), HEC (hydroxyethyl celluloses) and others.
**(d) lubricity/calendering aids:** eg in levels up to 2% by weight, for example calcium stearate, ammonium stearate, zinc stearate, wax emulsions, waxes, alkyl ketene dimer, glycols.
**(e) dispersants:** eg in levels up to 2 per cent by weight, for example polyelectrolytes such as polyacrylates and copolymers containing acrylate species, especially polyacrylate salts (eg sodium and aluminium optionally with a group II metal salt), sodium hexametaphosphates, non-ionic polyol, polyphosphoric acid, condensed sodium phosphate, non-ionic surfactants, alkanolamine and other reagents commonly used for this function.
**(f) antifoamers/defoamers:** eg in levels up to 1% by weight, for example blends of surfactants, tributyl phosphate, fatty polyoxyethylene esters plus fatty alcohols, fatty acid soaps, silicone emulsions and other silicone containing compositions, waxes and inorganic particulates in mineral oil, blends of emulsified hydrocarbons and other compounds sold commercially to carry out this function.
**(g) dry or wet pick improvement additives:** eg in levels up to 2% by weight, for example melamine resin, polyethylene emulsions, urea formaldehyde, melamine formaldehyde, polyamide, calcium stearate, styrene maleic anhydride and others.
**(h) dry or wet rub improvement and abrasion resistance additives:** eg in levels up to 2% by weight, for example glyoxal based resins, oxidised polyethylenes, melamine resins, urea formaldehyde, melamine formaldehyde, polyethylene wax, calcium stearate and others.
**(i) gloss-ink hold-out additives:** eg in levels up to 2% by weight, for example oxidised polyethylenes, polyethylene emulsions, waxes, casein, guar gum, CMC, HMC, calcium stearate, ammonium stearate, sodium alginate and others.
**(j) optical brightening agents (OBA) and fluorescent whitening agents (FWA):** eg in levels up to 1% by weight, for example stilbene derivatives.
**(k) dyes:** eg in levels up to 0.5% by weight.
**(l) biocides/spoilage control agents:** eg in levels up to 1% by weight, for example metaborate, sodium dodecylbenene sulphonate, thiocyanate, organosulphur, sodium benzonate and other compounds sold commercially for this function eg the range of biocide polymers sold by Calgon Corporation.
**(m) levelling and evening aids:** eg in levels up to 2% by weight, for example non-ionic polyol, polyethylene emulsions, fatty acid, esters and alcohol derivatives, alcohol/ethylene oxide, sodium CMC, HEC, alginates, calcium stearate and other compounds sold commercially for this function.
**(n) grease and oil resistance additives:** eg in levels up to 2% by weight, eg oxidised polyethylenes, latex, SMA (styrene maleic anhydride), polyamide, waxes, alginate, protein, CMC, HMC.
**(o) water resistance additives:** eg in levels up to 2% by weight, eg oxidised polyethylenes, ketone resin, anionic latex, polyurethane, SMA, glyoxal, melamine resin, urea formaldehyde, melamine formaldehyde, polyamide, glyoxals, stearates and other materials commercially available for this function.
**(p) insolubiliser:** eg in levels up to 2% by weight.

For all of the above additives, the percentages by weight quoted are based on the dry weight of pigment (100%) present in the composition. Where the additive is present in a minimum amount the minimum amount may be 0.01% by weight based on the dry weight of pigment.

The particulate coating pigment material incorporated in the coating composition employed in step (b) where applied may also be surface treated, eg with a surface treatment agent as described for the appropriate particulate filler material which may be employed in step (a), and the benefits of such treatment are illustrated in the Examples later. However, it is not essential that the particulate coating pigment material is so treated.

A coating composition for use in step (b) may be made as follows. A dispersed aqueous suspension of the pigment(s) is formed using a conventional dispersing agent, eg a polyacrylate. The solids content of the suspension may be greater than 50% by weight, eg greater than 60% by weight. The suspension is then mixed with the adhesive and other optional ingredients to form the coating composition. The adhesive may form from 4% to 30% by weight based on the total dry weight of pigment or pigments present.

We have found that a particularly preferred class of pigments for use in the coating composition in step (b) comprises a kaolin or a calcium carbonate or a blend of the two. As noted above, such pigment materials may optionally be surface treated with one of the surface treatment agents specified above for use in treating particulate material useful as a filler material in the paper making compositions employed in step (a). As will be familiar to those skilled in the art, the coating pigment material will generally be finer, ie generally of smaller particle size, than that employed to provide the paper filler. Platey particulate pigment, eg kaolin particles having an average aspect ratio of at least 25, optionally together with other material, eg precipitated calcium carbonate, is a preferred coating pigment material especially to give a smooth gloss surface.

The coating step (b) may be carried out in a known way which will depend upon the material to be coated, the coating composition to be applied and other factors as determined by the operator, eg speed and ease of runnability eg using a conventional coating machine.

Methods of coating paper and other sheet materials are widely published and well known. For example, there is a review of such methods published in Pulp and Paper International, May 1994, page 18 et seq. Sheets may be coated on the sheet forming machine, ie "on-machine", or "off-machine" on a coater or coating machine. Use of high solids compositions is desirable in the coating method because it leaves less water to evaporate subsequently. However, as is well known in the art, the solids level should not be so high that high viscosity and levelling problems are introduced.

All known methods of coating for use in step (b) of the method according to the present invention require (i) a means of applying the coating composition to the material to be coated, viz an applicator; and (ii) a means for ensuring that a correct level of coating composition is applied, viz a metering device. When an excess of coating composition is applied to the applicator, the metering device is downstream of it. Alternatively, the correct amount of coating composition may be applied to the applicator by the metering device, eg as a film press. At the points of coating application and metering, the paper web support ranges from a backing roll, eg via one or two applicators, to nothing (ie: just tension). The time the coating is in contact with the paper before the excess is finally removed is the dwell time - and this may be short, long or variable.

The coating is usually added by a coating head at a coating station. According to the quality desired, paper grades may be single layer coated, double layer coated and even triple layer coated. When providing more than one coat, the initial coat (precoat) may have a cheaper formulation and optionally less pigment in the coating composition. A coater that is applying a double coating, ie a coating on each side of the paper, will have two or four coating heads, depending on the number of sides coated by each head. Most gloss publication grade papers if coated have only a single coating layer. Most coating heads coat only one side at a time, but some roll coaters (eg film press, gate roll, size press) coat both sides in one pass.

Examples of known coaters which may be employed in step (b) include air knife coaters, blade coaters, rod coaters, bar coaters, multi-head coaters, roll coaters, roll/blade coaters, cast coaters, laboratory coaters, gravure coaters, kiss coaters, liquid application systems, reverse roll coaters and extrusion coaters.

Calendering as used in step (c) is a well known process and calendering and so-called supercalendering machines to carry out such a process are widely available. In calendering paper smoothness and gloss is improved and bulk is reduced by passing a coated paper sheet between calender nips or rollers one or more times. Usually, the paper is passed between nips 5 or more times. Usually, elastomer coated rolls are employed in modern machines to give pressing of high solids compositions. An elevated temperature may be applied. The paper after coating and calendering may have a total weight per unit area in the range 30g.m⁻² to 70g.m⁻², especially 49g.m⁻² to 65g.m⁻² or 35g.m⁻² to 48g.m⁻². The final coating preferably has a weight per unit area per side of the paper sheet preferably from 3.gm⁻² to 20g.m⁻², especially from 5g.m⁻² to 13g.m⁻². Such a coating may be applied to both sides of the paper which is usually desired for gloss publication grade papers. Alternatively, where no coating step is applied prior to calendering the paper may comprise supercalendered paper having a weight per unit area in the range of from 65g.m⁻² to 70g.m⁻². The coated paper may be so called light weight coated (LWC) or ultra light weight coated (ULWC) paper.

The paper gloss produced by the method according to the invention may be greater than 45 TAPPI units and the Parker Print Surf value at a pressure of 1MPa of each paper coating may be less than 2*µ*m.

The gloss of a coated paper surface may be measured by means of a test laid down in TAPPI Standard No 480 ts-65. The intensity of light reflected at an angle from the surface of the paper is measured and compared with a standard of known gloss value. The beams of incident and reflected light are both at an angle of 75°C to the normal to the paper surface. The results are expressed in TAPPI gloss units.

The Parker Print Surf test provides a measure of the smoothness of a paper surface, and comprises measuring the rate at which air under pressure leaks from a sample of the coated paper which is clamped, under a known standard force, between an upper plate which incorporates an outlet for the compressed air and a lower plate, the upper surface of which is covered with a sheet of either a soft or a hard reference supporting material according to the nature of the paper under test. From the rate of escape of the air, a root mean cube gap in *µ*m between the paper surface and the reference material is calculated. A smaller value of this can represent a higher degree of smoothness of the surface of the paper under test.

In use of the paper produced following step (c), the paper may advantageously be printed using a gravure printing process. The gravure printing process may be carried out in any of the ways well known to those skilled in the printing art.

As demonstrated hereinafter, the printing performance obtained in printing the paper produced is unexpectedly and beneficially improved by the incorporation of the surface treated particulate filler material in step (a) in the formation of the base sheet which is subsequently optionally coated and calendered in steps (b) and (c) and then printed upon by a gravure process.

Although use of surface treated minerals for specific applications in the paper making art is known, the particular use in this way of a treated filler material to improve the properties of subsequent printing following optional coating and calendering is not a procedure which is known in or suggested by the prior art.

Embodiments of the present invention will now be described by way of example with reference to the following Examples:

### EXAMPLE 1

A paper making furnish was prepared from a Canadian bleached sulphite softwood pulp. The pulp was soaked overnight in filtered water, disintegrated for 10 minutes, diluted with water to a consistency of about 1.8% by weight and beaten in a beater to a Canadian Standard Freeness of 300. The pulp was then diluted again with water and subjected to further disintegration to give a final fibre content of 0.5% by weight the remainder being essentially water.

The following three filler compositions were prepared for incorporation into the diluted cellulosic pulp:
A. A kaolin clay having a particle size distribution such that 65% by weight consisted of particles having an equivalent spherical diameter smaller than 2*µ*m was dispersed in water by means of a mixer to form a suspension containing 10% by dry weight of kaolin.
B. A further sample of the same kaolin clay was surface treated by mixing in a mechanical mixer at 90°C for 15 minutes with 1% by weight, based on the weight of dry kaolin, of a molten primary hydrogenated tallow amine. The surface treated kaolin was then dispersed in water using mechanical agitation to form a suspension containing 10% by dry weight of the surface treated kaolin.
C. A further sample of the same kaolin clay was surface treated as in B and the surface treated kaolin was then dispersed in water containing 1.8% by weight of a sodium dodecyl sulphate surfactant and 0.1% by weight of an antifoamer, both percentages by weight being based on the weight of dry surface treated kaolin, to form a suspension containing 60% by dry weight of kaolin. Finally the suspension was diluted with water to 10% by dry weight of kaolin. The antifoamer was a 30% active emulsion in water of a commercially available silicone based compound.

A sufficient quantity of each filler composition was added to the diluted cellulosic pulp to give 15% by weight of the dry filler, based on the total weight of filler and cellulosic fibres. A retention aid comprising a cationic polyacrylamide was added in an amount of 0.02% by weight, based on the weight of the cellulosic fibres. In each case handsheets were prepared from the paper making stock by means of a Formette Dynamique forming machine using a wire speed of 1000m.min⁻¹. The dry substance weight of the finished hand sheets was in the range from 60 to 65g.m⁻².

Two different paper coating Compositions 1 and 2 were prepared according to the formulations given in Table 1 below:

**TABLE 1**

| | **Composition 1** | **Composition 2** |
|---|---|---|
| Coating pigment 1 (parts by weight) | 100 | 0 |
| Coating pigment 2 (parts by weight) | 0 | 100 |
| Latex adhesive 1 (parts by weight) | 2.4 | 2.4 |
| Latex adhesive 2 (parts by weight) | 2.4 | 2.4 |
| Ammonium stearate (parts by weight) | 0.8 | 0.8 |
| % by weight dry solids | 51.1 | 51.0 |

Coating pigment 1 was the same kaolin clay as was used in filler composition A above.

Coating pigment 2 was exactly the same as filler composition C above, except that it was incorporated into the coating composition in the form of a suspension containing 60% by dry weight of kaolin.

Latex adhesive 1 was an alkali thickening acrylic latex.

Latex adhesive 2 was an acrylic latex with less pronounced thickening properties.

The ammonium stearate was added as a lubricant in the form of a 30% active dispersion of ammonium stearate in water.

The viscosity of each paper coating composition was measured by means of a Brookfield Viscometer at a spindle speed of 100rpm. Composition 1 was found to have a viscosity of 800mPa.s and Composition 2 was found to have a viscosity of 960mPa.s.

Handsheets which had been prepared from paper making stock containing filler compositions A, B and C respectively were attached with their top side (i.e. the side which was not in contact with the wire of the sheet forming machine) uppermost to a backing sheet which was then wrapped around the drum of a "HELI-COATER™" laboratory paper coating machine as described in GB-A-2225261. Sheets filled with each of the three filler compositions were coated with both coating Composition 1 and coating Composition 2 in a number of different runs. In each run the rotational speed of the drum was such as to give a paper speed of 400m.min⁻¹ and the blade angle was 45°, but the force applied to bias the blade against the drum was varied from run to run to give a range of different coat rates in the range of from about 6 g.m⁻² to about 12 g.m⁻².

The coated handsheets were dried using a combination of infra red lamps and hot air and were then conditioned overnight at 23°C and 50% relative humidity. The hand sheets were then calendered by being passed 10 times between the rolls of a supercalender at a temperature of 65°C and a pressure of 1000psi (6.89MPa), and were then conditioned again in the same way as described earlier. Each coated handsheet was tested for paper gloss by the method prescribed in TAPPI Standard No T480ts-65 using a Hunterlab D16 gloss meter at an angle of incidence and measurement of 75° with the normal to the paper. The samples of paper coated at the different coat weights were also tested for gravure print quality by methods described in the article "Realistic paper tests for various printing processes" by A Swan, published in "Printing Technology", Vol 13, No 1, April 1969, pages 9-22. A gravure printing cylinder was used with an area of deeply etched cells to give a solid black area, and an area of less deeply etched cells to give a half-tone area. The half-tone area was used to estimate the percentage of gravure dots which were missing from the test print. This percentage was expressed as "% missing dots". The solid black area was used to measure the gravure print density using a Macbeth density meter.

The coefficient of friction of the coated handsheets was measured by means of a Monsanto tensometer.

Graphs were plotted for each of the four measured properties against coat weight, and in each case the value of the property which corresponded to a coat weight of 8g.m⁻² was found by interpolation. The results are set forth in Table 2 below:

**TABLE 2**

| **Filler composition** | **Coating composition** | **Paper gloss** | **% missing dots** | **Coefficient of friction** | **Print density** |
|---|---|---|---|---|---|
| A (comp.) | 1 | 52 | 3.0 | 0.35 | 1.90 |
| B (inv.) | 1 | 50 | 2.0 | 0.35 | 1.90 |
| C (inv.) | 1 | 48 | 1.0 | 0.35 | 1.90 |
| A (comp.) | 2 | 55 | 2.0 | 0.29 | 1.80 |
| B (inv.) | 2 | 54 | 1.2 | 0.28 | 1.80 |
| C (inv.) | 2 | 55 | 0.5 | 0.26 | 1.78 |

where "comp" = comparative and "inv." = composition embodying the invention.

The results given in Table 2 show that when a paper is made from a paper making stock which contains as a filler a kaolin clay which has been treated with 1% by weight of a primary amine having a long chain alkyl group derived from hydrogenated tallow (filler composition B), and when that paper is coated with a composition containing a conventional, untreated coating pigment (coating composition 1) and then calendered, a surprising improvement in the gravure print quality (as evidenced by a reduction in the percentage of missing dots) is obtained, but with no reduction in the print density or in the coefficient of friction. However, an even greater improvement in the gravure print quality, is obtained when a surfactant is also incorporated into the filler composition (filler composition C) and the composition is coated with a coating composition comprising a treated pigment (coating composition 2). A coated paper produced in this way has an exceptionally good gravure print quality and shows a useful reduction in the coefficient of friction is obtained, but at the expense of a reduction in print density.

### EXAMPLE 2

A paper making furnish for a supercalendered (uncoated) SC-magazine grade paper was prepared from a mixture of 70% by weight of chemical thermomechanical pulp and 30% by weight of chemical pulp. The pulp was soaked overnight in filtered water, disintegrated for 10 minutes, diluted with water to a consistency of about 1.8% by weight and beaten in a laboratory beater to a Canadian Standard Freeness of 300. The suspension was diluted to a consistency of 0.5% by weight fibres and further disintegrated.

The following five filler compositions were prepared for incorporation into the diluted cellulosic pulp:
D. A kaolin clay having a particle size distribution such that 34% by weight consisted of particles having an equivalent spherical diameter smaller than 2*µ*m was dispersed in water to form a suspension containing 10% by dry weight of kaolin by means of a mixer.
E. A further sample of the kaolin clay as in D was surface treated by mixing in a mechanical mixer at 90°C for 15 minutes with 1% by weight, based on the dry weight of kaolin, of a molten primary hydrogenated tallow amine. The surface treated kaolin was then dispersed in water using mechanical agitation to form a suspension containing 10% by dry weight of the dry surface treated kaolin.
F. A further sample of the same kaolin clay as in D was surface treated as in E and the surface treated kaolin was then dispersed in water containing 1.8% by weight of a sodium dodecyl sulphate surfactant and 0.1% by weight of an antifoamer, both percentages by weight being based on the weight of dry surface treated kaolin, to form a suspension containing 60% by weight of dry kaolin. Finally the suspension was diluted with water to 10% by dry weight of kaolin. The antifoamer was a 30% active emulsion in water of a silicone based compound.
G. A ground natural chalk having a particle size distribution such that 86% by weight consisted of particles having an equivalent spherical diameter smaller than 2*µ*m was dispersed in water to form a suspension containing 10% by dry weight of chalk by means of a mixer.
H. A sample of a ground natural chalk prepared to the same particle size specification as Sample G, but surface treated with 1% by weight, based on the dry weight of chalk, of stearic acid, was suspended in water containing 0.75% by weight, based on the dry weight of chalk, of sodium dodecyl sulphate surfactant to form a suspension containing 70% by dry weight of chalk, which suspension was then diluted with water to 10% by dry weight of chalk.

A sufficient quantity of each filler composition was added to the diluted cellulosic pulp to give 30% by weight of the filler, based on the total dry weight of filler and cellulosic fibres. A retention aid comprising a cationic polyacrylamide was added in an amount of 0.02% by weight, based on the weight of the cellulosic fibres. In each case handsheets were prepared from the paper making stock by means of a Formette Dynamique forming machine using a wire speed of 1000m.min⁻¹. The dry substance weight of the finished hand sheets was about 60g.m⁻².

The hand sheets were conditioned overnight at 23°C and 50% relative humidity, and were then all subjected to an identical supercalendering programme using a supercalender which had a polished steel roll biased against a relatively soft roll of a fibrous material. The steel roll was heated to a temperature of 75°C, and the rolls were biased together at a line pressure of 92kg.cm⁻¹. Each hand sheet had a "wire side" which had been in contact with the wire mesh sheet of the hand sheet forming machine, and an opposite "top side". Each hand sheet was passed seven times through the supercalender with the top side in contact with the steel roll, and then three times with the wire side in contact with the steel roll. After calendering, the hand sheets were again conditioned overnight at 23°C and 50% relative humidity.

The calendered hand sheets were then tested for print gloss, print density, gravure print quality (% missing dots) and surface smoothness. The print gloss was determined using the Hunterlab D16 gloss meter at an angle of incidence and measurement of 75° with the normal to the paper. The print density and % missing dots were determined as described in Example 1 above.

The surface smoothness of the hand sheets was measured by means of a Parker Print Surf instrument.

The results are set forth in Table 3 as follow:

**TABLE 3**

| **Sample** | **Print gloss (%)** | **Print density (standard density units)** | **% missing dots** | **Surface smoothness (*µ*m)** |
|---|---|---|---|---|
| D (comp.) | 68 | 1.91 | 8.6 | 2.06 |
| E (inv.) | 61 | 1.90 | 3.2 | 1.85 |
| F (inv.) | 68 | 1.91 | 2.7 | 1.61 |
| G (comp.) | 55 | 1.72 | 7.4 | 1.98 |
| H (inv.) | 60 | 1.75 | 4.7 | 1.91 |

These results show that, if the results for Samples D, E and F are compared, the use of a kaolin filler surface treated in a method in accordance with an embodiment of the invention in the manufacture of a supercalendered magazine paper effects a substantial reduction in the percentage of missing dots in a gravure printing operation, and improves the surface smoothness of the paper, without significantly affecting the print density and the print gloss. If the results for Samples G and H are compared, it can be seen that the use of a chalk filler surface treated in accordance with an embodiment of the invention has brought about a similar improvement in gravure print quality and in surface smoothness.

### EXAMPLE 3

A paper making furnish for a supercalendered (uncoated) magazine paper was prepared from a mixture of 70% by weight of thermomechanical pulp and 30% by weight of bleached sulphite pulp. The sulphite pulp was soaked overnight in filtered water, disintegrated for 10 minutes, diluted with water to a consistency of about 1.8% by weight and beaten in a laboratory beater to a Canadian Standard Freeness of 300. The thermomechanical pulp was soaked overnight in filtered water, disintegrated for 20 minutes, diluted with water to a consistency of 3% by weight, disintegrated for 20 minutes, further diluted to a consistency of 2% by weight, and finally beaten for 10 minutes. The two dilute suspensions were then mixed together in the proportions required to give the desired dry weight ratio of thermomechanical pulp to sulphite pulp, and the mixed suspension was further disintegrated and finally diluted to a consistency of 0.5% by weight. The following four filler compositions were prepared for incorporation into the diluted cellulosic pulp:
I. A kaolin clay having a particle size distribution such that 34% by weight consisted of particles having an equivalent spherical diameter smaller than 2*µ*m was dispersed in water to form a suspension containing 10% by weight of dry kaolin by means of a laboratory mixer.
J. A further sample of the same kaolin clay was surface treated by mixing in a mechanical mixer at 90°C for 15 minutes with 1% by weight, based on the weight of dry kaolin, of a molten primary hydrogenated tallow amine. The surface treated kaolin was then dispersed in water to form a suspension containing 10% by weight of the dry surface treated kaolin.
K. A further sample of the same kaolin clay was dispersed in water to form a suspension containing 10% by weight of dry kaolin by means of a laboratory mixer, and there was then added to this suspension, with only gentle agitation to avoid foaming, 1% by weight, based on the weight of dry kaolin, of 1-hydroxyethyl-2-heptadecenyl imidazoline, an amphoteric surfactant.
L. A further sample of the same kaolin clay was treated in the same way as described for Sample K above, except that the amount of the amphoteric surfactant used was 2% by weight, based on the weight of dry kaolin.

A sufficient quantity of each filler composition was added to the diluted cellulosic pulp to give 30% by weight of the dry filler, based on the total weight of filler and cellulosic fibres. A retention aid comprising a cationic polyacrylamide was added in an amount of 0.02% by weight, based on the weight of the cellulosic fibres. In each case handsheets were prepared from the paper making stock and were supercalendered and conditioned in the same way, and under exactly the same conditions, as were described in Example 2 above.

The calendered hand sheets were then tested for print gloss, print density, gravure print quality (% missing dots) and surface smoothness in the same manner as in Example 2 above.

The results are set forth in Table 4 below:

**TABLE 4**

| **Sample** | **Print gloss (%)** | **Print density (standard units)** | **% missing dots** | **Surface smoothness (*µ*m)** |
|---|---|---|---|---|
| I (comp.) | 61 | 1.90 | 5.0 | 1.62 |
| J (inv.) | 56 | 1.84 | 1.4 | 1.69 |
| K (inv.) | 57 | 1.88 | 2.4 | 1.61 |
| L (inv.) | 59 | 1.89 | 1.3 | 1.43 |

These results show that the use as a filler in supercalendered magazine paper of a kaolin which has been surface treated in accordance with an embodiment of the invention effects a substantial improvement in gravure print quality, and also in the case of Sample L, an improvement in surface smoothness, without significantly affecting the print gloss and the print density.

## Claims

1. A method of producing a gloss publication grade paper showing when printed by a gravure printing process an improved print quality which method includes the steps of:
(a) preparing a paper sheet from a paper making composition comprising a cellulosic fibrous material and a particulate filler material;
(b) optionally coating the paper sheet with a coating composition comprising an aqueous suspension of a particulate coating pigment material and a hydrophilic binder; and
(c) calendering the paper sheet;
wherein in step (a) the particulate filler material employed in the paper making composition has been treated prior to addition to the cellulosic fibrous material by addition thereto of a surface treatment agent to hydrophobise the particulate filler material, the surface treatment agent comprising molecules having a hydrophilic moeity and a hydrophobic moeity, the hydrophobic moeity comprising at least one hydrocarbon group having from 8 to 30 carbon atoms.

2. A method as claimed in claim 1 and wherein in step (a) the surface active agent is present in an amount which forms from 0.1% to 2.0% of the dry weight of the particulate filler material.

3. A method as claimed in claim 1 or claim 2 and wherein the particulate filler material which is surface treated and employed in step (a) is selected from kaolinitic clay, calcined kaolin and alkaline earth metal carbonate.

4. A method as claimed in claim 1, claim 2 or claim 3 and wherein in step (a) the particulate filler material comprises kaolin or calcined kaolin, and the surface active agent comprises:
(a) an amine or a quaternary ammonium compound having at least one hydrocarbon group having a chain length of from 8 to 30 carbon atoms, or a salt of such an amine or quaternary ammonium compound; or
(b) a cationic or amphoteric surfactant having at least one hydrocarbon group having a chain length of from 8 to 30 carbon atoms;
or both.

5. A method as claimed in claim 4 and wherein the amphoteric surfactant has the general formula: 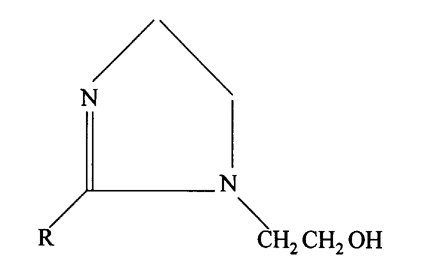 where R is a hydrocarbon group having a chain length of from 8 to 30 carbon atoms.

6. A method as claimed in claim 1, 2 or 3 and wherein the particulate inorganic material comprises an alkaline earth metal carbonate and the surface treatment agent comprises a carboxylic acid having at least one hydrocarbon group having a chain length of from 8 to 30 carbon atoms, or a water-soluble salt of such an acid.

7. A method as claimed in claim 1, claim 2 or claim 3 and wherein in step (a) the particulate filler material comprises an alkaline earth metal carbonate and the surface treatment agent comprises an anionic surfactant.

8. A method as claimed in any one of claims 4 to 7 and wherein the surface treatment agent comprises a surfactant and the composition also includes an antifoamer.

9. A method as claimed in any one of the preceding claims and wherein step (b) is applied and in step (b) the coating composition incorporates from 4% to 30% by weight of the hydrophilic binder based on the total solids content of the coating composition.

10. A method as claimed in claim 9 and wherein the particulate coating pigment material incorporated in the coating composition employed in step (b) has been surface treated with a hydrophobising surface treatment agent.

11. A method as claimed in claim 9 and wherein the particulate coating pigment material incorporated in the coating composition employed in step (a) has not been surface reacted with a surface treatment agent.

12. A method as claimed in any one of claims 9 to 11 and wherein the paper sheet formed is a lightweight or ultralightweight coated gloss sheet for gravure printing.

13. A method as claimed in any one of claims 1 to 8 and wherein optional step (b) is not applied and the paper sheet formed by step (c) is a supercalendered gloss sheet for gravure printing.

14. A method of producing a printed paper sheet which includes producing a gloss sheet by the method claimed in any one of the preceding claims and printing on the paper sheet by a gravure printing process.
